# EUROPÄISCHE PATENTSCHRIFT

(11) **EP 2 215 435 B1**
(45) Veröffentlichungstag und Bekanntmachung des Hinweises auf die Patenterteilung: **16.10.2019**
(21) Anmeldenummer: 08851307.2
(22) Anmeldetag: 31.10.2008
(51) Int. Cl.: G01F 23/24

(54) **SENSORANORDNUNG ZUR BESTIMMUNG EINES TANKFÜLLSTANDS**
SENSOR ARRANGEMENT FOR DETERMINING A TANK FILL LEVEL
ENSEMBLE CAPTEUR POUR DÉTERMINER LE NIVEAU DANS UN RÉSERVOIR

(30) Priorität: 23.11.2007 DE 102007056544
(43) Veröffentlichungstag der Anmeldung: 11.08.2010
(73) Patentinhaber: Robert Bosch GmbH, 70442 Stuttgart (DE)
(72) Erfinder: ULRICH, Markus, 73635 Rudersberg (DE); BABIC, Vlatko, 50823 Köln (DE); KRENZ, Guenther, 71711 Steinheim (DE); HAEBERER, Rainer, 75015 Bretten (DE); RATZEL, Wolf-Ingo, 70565 Stuttgart (DE); HEZEL, Bruno, 70565 Stuttgart (DE); GERLACH, Michael, 71672 Marbach A.n. (DE); STRAUS, Vaclav, 37008 Ceske Budejovice (CZ)
(86) Internationale Anmeldenummer: PCT/EP2008/064827
(87) Internationale Veröffentlichungsnummer: WO 2009/065720

(56) Entgegenhaltungen:
- EP-A- 1 037 028
- WO-A-00/19173
- DE-A1- 1 548 883
- DE-A1- 2 063 103
- DE-A1- 2 112 121
- DE-A1- 10 027 183
- DE-B1- 1 515 270
- NL-C1- 1 026 654
- US-A- 3 207 629
- US-A- 4 182 363
- US-A- 5 178 009

## Beschreibung

Die Erfindung geht aus von einer Sensoranordnung nach der Gattung des unabhängigen Anspruchs.

Bei Fahrzeugen mit Verbrennungsmotor muss aufgrund der in den nächsten Jahren anstehenden verschärften Abgasgesetzgebung unter anderem der Schadstoffstickstoffoxid in erhöhtem Maß reduziert werden. Ein Verfahren, das hierbei zur Anwendung kommt, ist das Verfahren der selektiven und katalytischen Reduktion, bei dem der Schadstoff Stickoxid unter Zuhilfenahme eines flüssigen Reduktionsmittels, beispielsweise einer wässrigen Harnstofflösung, zu Stickstoff und Wasser reduziert wird. Das flüssige Reduktionsmittel wird hierbei in einem Tank gelagert und mittels einer Pumpe über eine Leitung von einem Tank zu einer Dosierstelle befördert. Ein Füllstandssensor zeigt hierbei zweckmäßiger Weise den Füllstand des Tanks an.

Aus der DE 101 62 269 ist bereits eine Vorrichtung zum Bestimmen des Füllstands einer Flüssigkeit bekannt, die unterschiedlich lange, in Kunststoff eingespritzte Messelektroden aufweist.

Weiterhin ist aus der US 6,063,350 bekannt, einen Temperatursensor und einen Füllstandssensor für einen Harnstofftank über einem gemeinsamen mehrpoligen Stecker zu kontaktieren.

Aus der EP 1 037 028 A1 geht ferner ein Sensor zur kombinierten Temperatur- und Füllstandserfassung hervor.

### Offenbarung der Erfindung

Die erfindungsgemäße Sensoranordnung mit den kennzeichnenden Merkmalen des unabhängigen Anspruchs hat demgegenüber den Vorteil der Bereitstellung kompakt angeordneter Mittel zur Sensierung mehrerer für den Betrieb insbesondere eines Reduktionsmitteltanks bedeutsamer Messgrößen.

Durch die in den abhängigen Ansprüchen aufgeführten Maßnahmen sind vorteilhafte Weiterbildungen und Verbesserungen der im unabhängigen Anspruch angegebenen Sensoranordnung möglich.

Erfindungsgemäß wird vorgeschlagen, den Temperatursensor im Inneren des Trägers, und zwar innerhalb eines röhrenförmigen Bereichs innerhalb des Trägers, anzuordnen, weil hierdurch eine geschützte Anordnung des Temperatursensors ermöglicht wird in einem ohnehin für die zur Füllstandsmessung dienenden Messelektroden erforderlichen Träger.

Erfindungsgemäss ist es hierbei, darüber hinaus auf der Kontaktseite der Messelektroden für den Füllstand einen Abdeckungsspritzungsbereich vorzusehen und diesen einstückig mit Material zu verbinden, das den Temperatursensor gut wärmeleitend innerhalb des Trägers arretiert. Hierdurch wird in einem einfachen zweistufigen Herstellungsverfahren mit einer Primärumspritzung und einer darauffolgenden Sekundärumspritzung eine kompakte, gegen chemische Einflüsse des Reduktionsmittels resistente Multisensoranordnung, die darüber hinaus zeitnah auf Temperaturschwankungen im Tank reagieren kann, bereitgestellt.

Durch die weiteren in den weiteren abhängigen Ansprüchen und in der Beschreibung aufgeführten Maßnahmen ergeben sich weitere Vorteile.

### Kurze Beschreibung der Zeichnungen

Es zeigen:
- Figur 1: einen Tank mit Füllstandssensor,
- Figur 2: einen zweiten Füllstandssensor,
- Figur 3: einen dritten Füllstandssensor,
- Figur 4: eine Teilansicht einer Sensoranordnung zur Bestimmung eines Füllstands und
- Figur 5: eine schematische Ansicht einer Sensoranordnung mit integriertem Temperatursensor.

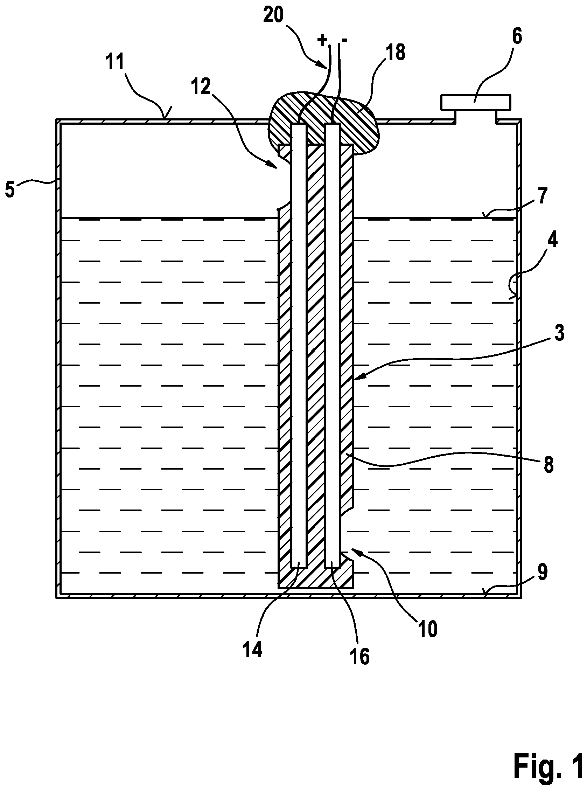

Figur 1 zeigt einen Tank 5 mit einem innerhalb des Tanks angeordneten Füllstandssensor 3, der sich vom Boden 9 des Tanks bis zum höchsten im Tank erreichbaren Flüssigkeitspegel 7 einer wässrigen Harnstofflösung ("Ad Blue") im Wesentlichen parallel zur seitlichen Tankwand 4 erstreckt. Auf der Oberseite des Tanks, an der eine verschließbare Öffnung 6 des Tanks angeordnet ist, wird der Füllstandssensor 3 mittels eines mit der Tankoberseite verbundenen Abdeckbereichs 18 in senkrechter Position gehalten. Der Füllstandssensor 3 weist eine als Metallstift ausgebildete erste Messelektrode 14 und eine ebenfalls als Metallstift ausgebildete zweite Messelektrode 16 auf. Beide Messelektroden sind in einem Träger 8 eingebettet, der diese mit Ausnahme jeweils eines Messfensters vollständig umgibt. Die erste Messelektrode 14 kann hierbei über ein oberes Messfenster 12, die durch eine entsprechende Aussparung im Träger 8 gebildet ist, mit der im Tank befindlichen Flüssigkeit in elektrischen Kontakt treten, sofern deren Pegel 7 einen bestimmten maximalen Wert überschreitet. Die zweite Messelektrode 16, im Folgenden auch als Referenzelektrode bezeichnet, weist ein unteres Messfenster 10 auf, das in Bodennähe des Tanks angeordnet ist. Auf der der Tankoberseite 11 zugewandten Seite sind die beiden Messelektroden mit einer elektrischen Kontaktierung 20 verbunden, wobei die Messelektroden an dieser Stelle aus dem Träger 8 herausragen, jedoch zusammen mit dem den Messelektroden zugewandten Teil der elektrischen Kontaktierung 20 von dem Abdeckbereich 18 umgeben sind.

Der Füllstandssensor 3 ermöglicht eine diskontinuierliche Füllstandsmessung. Sind beide Messelektroden mit der im Tank befindlichen Flüssigkeit in elektrischem Kontakt, weil beide Messfenster zumindest teilweise in die Flüssigkeit eintauchen, so kann bei an der elektrischen Kontaktierung 20 angelegter elektrischer Spannung über die Flüssigkeit und die Messelektroden ein elektrischer Strom fließen. Ein fließender elektrischer Strom ist das Signal, dass der Tank voll ist. Steht die Flüssigkeit zwischen den beiden Messfenstern 12 bzw. 10 der beiden gleich langen in das Kunststoffgehäuse eingespritzten Metallstifte, so ist der Stromkreis unterbrochen, d. h. es fließt kein Strom, was bedeutet, dass der Tank nicht voll ist. Gleiches gilt, wenn der Flüssigkeitspegel unter das Messfenster 10 absinkt. Der die elektrische Kontaktierung gegen Flüssigkeitseinwirkungen abschirmende und den Füllstandssensor in seiner senkrechten Position haltende Abdeckbereich 18 ist hierbei als Sekundärumspritzung aus Kunststoff auf dem als Primärumspritzung ausgebildeten Träger 8 ausgeführt; dies gewährleistet einen sicheren Betrieb des Füllstandssensors auch bei Verwendung chemisch aggressiver Materialien, wie beispielsweise einer wässrigen Harnstofflösung.

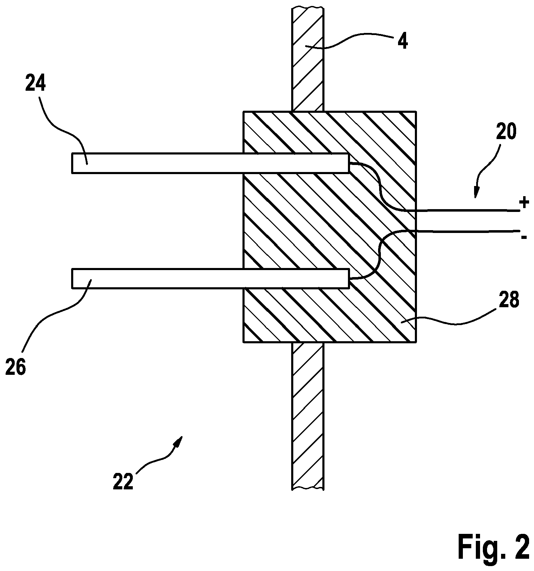

Figur 2 zeigt eine Variante 22 eines Füllstandssensors für einen radialen Anbau im Tank. Hierbei ist in einer senkrechten Tankwand 4 ein Trägerelement 28 flüssigkeitsdicht integriert. Das Trägerelement hält zwei Messstifte parallel zueinander in waagerechter Position. Dabei ist der erste Messstift 24 oberhalb des zweiten Messstifts 26 angeordnet. Eine elektrische Kontaktierung 20 ist aus dem Trägerelement 28 herausgeführt zur Kontaktierung des Füllstandssensors außerhalb des Tanks.

Ähnlich wie bei der Anordnung nach Figur 1 schließt sich ein Stromkreis zwischen den beiden Messstiften 24 und 26, sobald beide Messstifte aufgrund hinreichend hohen Füllstands im Tank mit der im Tank befindlichen Flüssigkeit in Berührung kommen.

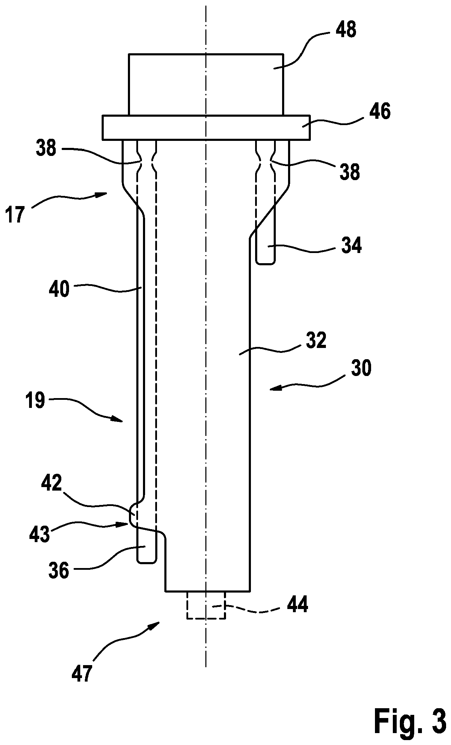

Figur 3 zeigt einen Füllstandssensor bzw. eine Sensoranordnung 30 zur Bestimmung eines Füllstands von Ad Blue in einem Reduktionsmitteltank. Sie weist eine erste Messelektrode 34 und eine parallel angeordnete, längere zweite Messelektrode 36 auf, die als Metallstifte ausgeführt sind, wobei die längere Elektrode als Referenzelektrode dient. Die beiden Messelektroden werden von einem Träger 32 gehalten, der durch teilweise Umspritzung der Elektroden mit Kunststoff hergestellt ist. Beide Messelektroden weisen auf der im Folgenden als Arretierungsseite 17 bezeichneten Seite ein als Umfangsnut 38 ausgebildetes Arretierungsmittel auf, das vollständig vom (Primär-) Kunststoffumspritzungsbereich bzw. Träger 32 umschlossen ist. Die Sensoranordnung 30 ist dazu eingerichtet, in ähnlicher Weise wie der Sensor nach Figur 1, senkrecht parallel zu einer seitlichen Tankwand im Inneren eines Tanks bzw. Teiltanks eingebaut zu werden. Die Arretierungsseite 17 der Messelektroden befindet sich dann nahe der Oberseite 11 des Tanks. Die Umfangsnute 38 stehen ungefähr auf gleicher Höhe, während die beiden Messelektroden unterschiedlich tief in den Tank hineinragen; die längere , zweite Messelektrode 36 dient hierbei als Referenzelektrode. Die kürzere Messelektrode 34 wird lediglich auf ihrer der Arretierungsseite 17 zugewandten Hälfte vom Träger 32 gehalten, während die der Arretierungsseite 17 abgewandte Hälfte frei nach unten ragt, so dass sie in diesem Bereich auf ihrem gesamten Umfang bei entsprechendem Flüssigkeitsstand im Tank von Flüssigkeit benetzt werden kann. Der Referenzstift 36 ist nicht nur im Bereich des Arretierungsmittels 38 mit Kunststoff umspritzt, sondern in einem mittleren Bereich 40 zusätzlich halbseitig vom Primärkunststoffumspritzungsbereich 32 umgeben. Auf der der Arretierungsseite 17 abgewandten Seite 19 der Referenzelektrode 36 weist der Träger 32 ein Haltemittel 42 zur partiellen radialen Fixierung der Referenzelektrode auf. Dieses Haltemittel ist einstückig mit dem Träger 32 verbunden und umgibt die Referenzelektrode ähnlich wie ein Achslager vollständig entlang ihres Umfangs. Jenseits der Arretierungsseite 17, des mittleren Bereichs 40 und des Haltemittels 42 ragt das Ende der Referenzelektrode frei nach unten, ähnlich wie die der Arretierungsseite abgewandten Hälfte der ersten Messelektrode. Der das Haltemittel 42 bildende Bereich 43 des Trägers 32 kann dabei in einem Arbeitsgang im Rahmen einer geeignet durchgeführten Umspritzung der Messelektroden mit Kunststoff hergestellt werden. Der Träger 32 weist als weiteren einstückig mit ihm verbundenen Bestandteil eine Abschlusskante 46 auf, auf die eine Sekundärumspritzung aus Kunststoff als Abdeckbereich 48 aufgebracht ist. Dieser Abdeckbereich 48 dient, in ähnlicher Weise wie bei der Sensoranordnung nach Figur 1, zur flüssigkeitsdichten Abdeckung der in Figur 3 nicht näher dargestellten elektrischen Kontakte der Messelektroden auf der Oberseite eines Tanks. Auf der Unterseite 47 der Sensoranordnung, die in Bodennähe eines Tanks angeordnet wird, befindet sich ein Temperatursensor 44 zur Messung der Temperatur der im Tank befindlichen Flüssigkeit.

Zur Vermeidung von Fehlfunktionen und zur Vermeidung von Korrosion im Inneren der Sensoren für Füllstand bzw. Temperatur müssen die Messelemente geeignet gegenüber dem chemisch aggressiven Ad Blue abgedichtet werden. Hierbei ist eine Primärumspritzung 32 der als Metallstifte ausgebildeten Messelektroden und eine sich anschließende Sekundärumspritzung 48, die den Sensorkopf bildet, vorgesehen. Diese Maßnahme, also das Vorsehen einer Primär- und einer Sekundärumspritzung, ist erforderlich, da die Einlegeteile bzw. Messelektroden bzw. eine mit ihnen verbundene elektrische Kontaktierung nicht frei fliegend eingespritzt werden können. Zwischen Primär- und Sekundärumspritzung können Spalten entstehen, die bei Temperaturwechsel durch die unterschiedlichen Wärmeausdehnungskoeffizienten der Einlegeteile aus Stahl (Messelektroden) und dem umgebenden Kunststoff verstärkt werden. Ebenso können im Dauerbetrieb Spalte zwischen den Metallstiften und dem umspritzten Kunststoffgehäuse 32 entstehen. Die beispielsweise aus Edelstahl hergestellten Metallstifte bzw. Messelektroden 34 und 36 haben einen erheblich kleineren Wärmeausdehnungskoeffizienten, als der Kunststoffkörper 32. Darauf ausgerichtet ist das Konstruktionsprinzip der Sensoranordnung nach Figur 3. Die Messelektroden sind nur im oberen Bereich, d. h. auf der Arretierungsseite 17, jeweils durch eine Umfangsnut 38 axial fest im Kunststoff fixiert, während sich die Metallstifte im mittleren, halb umspritzen Bereich 40 bzw. im Bereich des Haltemittels 42 bzw. jenseits davon axial bewegen können, zumal die Stifte stirnseitig, d. h. auf der der Unterseite 47 der Sensoranordnung zugewandten Seite, aus dem Kunststoff ragen. Diese Konstruktion gewährleistet eine unterschiedliche axiale Wärmeausdehnung der Metallstifte relativ zum Kunststoffkörper 32.

Alternativ kann die Sensoranordnung auch mehr als zwei Messelektroden aufweisen, die ebenfalls zueinander angeordnet sind, jedoch abgestufte Längen zwischen der Länge der kürzesten Elektrode 34 und der Länge der längsten, als Referenzelektrode verwendeten Elektrode 36 aufweisen. Somit kann anhand der elektrischen Leitfähigkeit zwischen dem jeweiligen Messstift und der Referenzelektrode 36 auf das Erreichen bzw. Nichterreichen mehr als einer Füllstandspo-sition im Tank geschlossen werden.

In einer weiteren alternativen Ausführungsform können die Referenzelektrode 36 bzw. die Elektroden, die in einem mittleren Bereich 40 halbseitig in den Träger 32 eingebettet sind, auch auf ihrer dem Tankinneren zugewandten Seite von einer dünnen Kunststoffschicht bedeckt sein, die das Ausdehnungsverhalten der Metallstifte im Wesentlichen unbeeinflusst lässt.

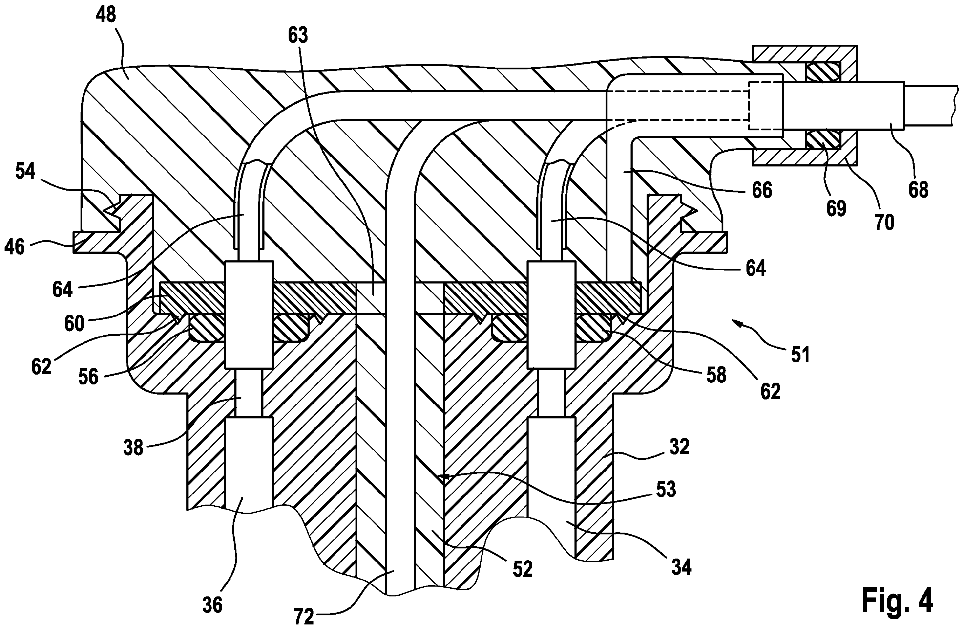

Figur 4 zeigt eine Teilansicht 51 einer erfindungsgemässen Sensoranordnung zur Bestimmung eines Füllstands. Dargestellt ist der Bereich des Sensorkopfs, der nicht in die Flüssigkeit eintaucht und über den die Messelektroden 34 bzw. 36 elektrisch kontaktiert werden. Gleiche oder ähnliche Bestandteile, wie bereits zuvor beschrieben, werden mit gleichen Bezugszeichen dargestellt und nicht nochmals näher erläutert. Die Messelektroden ragen jenseits der Umfangsnut 38 auf der dem Tankinneren abgewandten Seite über den Träger 32 hinaus. Dort sind sie jeweils mit einer elektrischen Kontaktierung 64 verbunden, die, relativ zueinander, elektrisch isoliert in ein gemeinsames Rundkabel 68 übergeht. Dieses elektrische Rundkabel 68 führt zu einer elektrischen Auswerteschaltung bzw. zu einem elektronischen Steuergerät, das auch durch das Motorsteuergerät gebildet sein kann. Die Messelektroden sind am oberen Ende des Trägers mittels als O-Ringe ausgebildeten Dichtelementen 56 bzw. 58 abgedichtet. Auf der dem Tankinneren zugewandten Seite werden die Dichtelemente vom Träger 32 begrenzt, auf der dem Tankinneren abgewandten Seite sind sie mittels einer auf dem Träger 32 angebrachten Trennplatte 60 vom restlichen Aufbau des Sensorkopfs abgetrennt. Die Trennplatte 60 weist hierbei Stege 62 auf, die in den Träger 32 eingreifen und zur radialen Fixierung der Trennplatte während der Montage dienen. Die Messelektroden durchgreifen hierbei die Trennplatte 60, um auf der den Umfangsnuten 38 abgewandten Seite mit der elektrischen Kontaktierung 64 in Verbindung stehen zu können. Die Trennplatte 60 weist ein zentrales Loch 63 auf, durch das eine vom elektrischen Rundkabel 68 ausgehende, vereinfacht dargestellte elektrische Doppelleitung 72 in Richtung Tankboden geführt ist. Diese Doppelleitung 72 dient zur elektrischen Kontaktierung eines nicht näher dargestellten Temperatursensors. Die elektrische Doppelleitung 72 liegt hierbei in einem röhrenförmigen Bereich 52, der mit dem gleichen Material 43 ausgefüllt ist, aus dem auch der als Sekundärumspritzung ausgeführte Abdeckbereich 48 besteht. Abdeckbereich 48 und röhrenförmiger Bereich 53 stehen hierbei einstückig miteinander in Verbindung und können in einem einzigen geeignet ausgelegten Umspritzungsvorgang hergestellt werden. Dabei kann das gleiche Material bzw. der gleiche Kunststoff verwendet werden, aus dem der Träger 32 besteht, alternativ ein anderes Material, das einen ähnlichen Wärmeausdehnungskoeffizienten wie das Material des Trägers 32 besitzt. Die elektrischen Kontaktierungen 64 können durch Löten, Schweißen oder Pressen hergestellt werden; das elektrische Rundkabel 68 wird mittels einer Kabelhalterung 66 fixiert, die auf der Trennplatte 60 randständig befestigt ist.

Bevor die Sekundärumspritzung bzw. die Herstellung des Abdeckbereichs 48 erfolgt, werden die bereits genannten O-Ring-Abdichtungen 56 bzw. 58 gegenüber der Sekundärumspritzung mittels der ebenfalls beschriebenen Trenn- bzw. Montageplatte 60 abgedichtet. Diese über die Stege 62 in den Träger 32 eingehakte Montageplatte verhindert durch eine enge Führung im Bereich der Metallstifte sowie umfangsseitig ein Eintreten flüssigen Kunststoffs in den O-Ring-Raum bei der Herstellung des Abdeckbereichs 48. Die feinen Stege 62 unterstützen hierbei eine axiale Abdichtung des O-Ring-Raumes. Die Kabelhalterung 66 gewährleistet, dass das Kabel bei der Sekundärumspritzung in seiner Lage fixiert ist. In der Anordnung nach Figur 4 wird die aus Figur 3 bekannte Abschlusskante 46 des Trägers 32 durch einen umlaufenden Steg an der Primärumspritzung gebildet, der überdies eine als Haken 54 ausgebildete Aufschmelzkante aufweist. Dieser Steg bzw. diese Aufschmelzkante wird von oben von der Sekundärumspritzung umflossen. Durch die Schwindung der Sekundärumspritzung beim Abkühlen während des Herstellungsprozesses wird sich die Sekundärumspritzung straff am umlaufenden Steg anlegen und somit die Aufschmelzkante, die während des Spritzvorgangs durch das Anschmelzen eine partielle Dichtstelle erzeugt hat, kraftmäßig entlasten: Die fertige Primärumspritzung ist kalt, die Sekundärumspritzung beim Umspritzen zunächst heiß. Beim Abkühlen schrumpft die Sekundärumspritzung und baut insbesondere im Bereich zwischen Haken 54 und Abschlusskante 46 des Trägers Druckspannungen auf die Primärumspritzung auf. Dadurch wird die für die Abdichtung verantwortliche Aufschmelzkante kräfteentlastet. Das Rundkabel 68, welches aus der Sekundärumspritzung 48 hinausragt, wird über eine mechanische Abdichtung mittels eines Dichtelements 69 aus einem Elastomer-Material und einem übergestülpten Spannelement 70 abgedichtet. Das Dichtelement 69, beispielsweise ein O-Ring, ist eine Radialabdichtung, die durch eine zusätzliche axiale Kraftkomponente mittels des übergestülpten Spannelements 70 verstärkt wird. Das beispielsweise als Kunststoffhülse ausgebildete Spannelement 70 ist über eine Kunststoffversschweißung mit der Sekundärumspritzung verbunden.

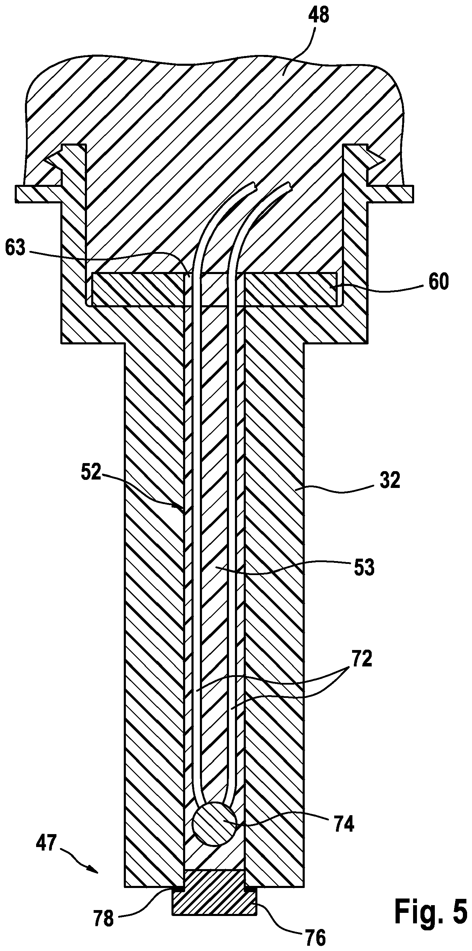

Figur 5 zeigt eine teilschematische Ansicht eines erfindungsgemässen Füllstandssensors mit integriertem, als NTC-Widerstand ausgebildeten Temperatursensor 74. Details wie die zur Füllstandsmessung erforderlichen Messelektroden und die elektrische Kontaktierung dieser Messelektroden sind in Figur 5 nicht näher dargestellt; sie dient zur Erläuterung des Aufbaus bzw. der Integration des Temperatursensors in die Sensoranordnung zur Bestimmung eines Füllstands. Die in Figur 4 bereits schematisch dargestellte elektrische Doppelleitung 72 führt zur Unterseite 47 der Sensoranordnung, wo sie den NTC-Widerstand, also einen Widerstand mit negativem Temperaturkoeffizienten, elektrisch kontaktiert. Der röhrenförmige Bereich 52 erstreckt sich hierbei von dem Abdeckbereich 48 bis zur Unterseite 47 der Sensoranordnung und ist im Wesentlichen vollständig mit dem Material der Sekundärumspritzung ausgefüllt. Zur Unterseite hin ist der röhrenförmige Bereich mittels eines Verschlusses 76 gegen die Tankflüssigkeit abgedichtet, wobei der Verschluss über einen umfangsseitigen Schweißbereich 78 mit dem Träger 32 verbunden ist.
Die Kombination eines Füllstands- mit einem Temperatursensor, d. h. die Anordnung beider Messelemente in einem Gehäuse mit einem gemeinsamen Kabelabgang, ermöglicht einen kompakten und gegen chemisch aggressive Materialen resistenten Aufbau. Die Temperatur soll zweckmäßiger Weise in Bodennähe des Tanks gemessen werden, d. h. in der Nähe bzw. in Höhe des niedrigsten, noch detektierbaren Flüssigkeitspegels. Dementsprechend ist der Temperatursensor 74 ungefähr auf Höhe des Kontaktbereichs der längsten Messelektrode angeordnet, die einen elektrischen Kontakt dieser Messelektrode mit Flüssigkeit im Tank ermöglicht. Hierzu beinhaltet die Primärumspritzung 32 des Füllstandssensors im Zentrum den röhrenförmigen Bereich 52, in welchem der NTC-Widerstand gesteckt werden kann. Die zuvor beschriebene Trennplatte 60 weist ein zentrales Loch 63 auf, durch das die Kabel des Temperatursensors in dem Abdeckbereich geführt werden. Dabei ist es wie beschrieben zweckmäßig, den Temperatursensor einzuspritzen, so kann er die unmittelbare Temperatur in Bodennähe des Tanks rasch und unverfälscht erfassen; wäre er in einer lediglich mit Luft gefüllten Röhre innerhalb des Trägers 32 angeordnet, würde er einerseits lediglich die Temperatur in der Luftröhre messen und andererseits sehr verzögert auf Temperaturänderungen im Tank reagieren. Eine rasche Erfassung der Temperatur im Tank ist jedoch wünschenswert, um frühzeitig durch entsprechendes Beheizen der Tankflüssigkeit ein Einfrieren zu verhindern bzw. eine Heizung rechtzeitig auszuschalten, um eine vorzeitige Alterung der im Tank befindlichen Flüssigkeit zu vermeiden. Die Sekundärumspritzung dringt hierbei während des Herstellungsprozesses durch die Öffnung der Montageplatte in die durchgehende Röhre 52 und umschließt so den Temperatursensor. Abschließend wird diese Röhre durch einen Schweißvorgang mit einer Kapsel bzw. einem Verschluss 76 verschlossen. Somit ist gewährleistet, dass der Temperatursensor völlig abgedichtet gegen das Ad Blue im unteren Bereich des Füllstandssensors arbeiten kann.

## Patentansprüche

1. Sensoranordnung zur Bestimmung eines Füllstands einer in einem Tank (5) enthaltenen Flüssigkeit (7), insbesondere eines Reduktionsmittels zur Entstickung von Abgasen einer Brennkraftmaschine, bei der mindestens zwei elektrisch leitfähige Messelektroden (14, 16) zur Füllstandsmessung teilweise in einen Träger (8, 32) aus elektrisch nicht leitfähigem Material eingebettet sind und ein Temperatursensor (44), insbesondere ein als Temperatursensor dienender elektrischer Widerstand (74) mit negativem Temperaturkoeffizienten, im Träger integriert ist, **dadurch gekennzeichnet, dass** der Temperatursensor im Inneren des Trägers (32) angeordnet ist und sich in einem röhrenförmigen Bereich (52) befindet, der mit einem Abdeckbereich (48) einstückig in Verbindung steht, mittels dessen die Messelektroden (14, 16) auf einer Seite (17) gegen Einwirkungen der Flüssigkeit abgedichtet sind, wobei der als Abdeckumspritzungsbereich ausgebildete Abdeckbereich einstückig mit Material verbunden ist, das den Temperatursensor gut wärmeleitend innerhalb des Trägers arretiert, wobei der Träger (8) durch eine Primärumspritzung der Messelektroden (14, 16) mit dem elektrisch nicht leitfähigen Material hergestellt ist, wobei die einstückige Verbindung des Abdeckumspritzungsbereichs mit dem Material dadurch erfolgt, dass der Abdeckumspritzungsbereich in einer darauffolgenden Sekundärumspritzung hergestellt ist.

2. Sensoranordnung nach Anspruch 1, **dadurch gekennzeichnet, dass** die Messelektroden im Wesentlichen parallel zueinander angeordnet sind und dass der röhrenförmige Bereich parallel zu den Messelektroden verläuft.

3. Sensoranordnung nach einem der vorhergehenden Ansprüche, **dadurch gekennzeichnet, dass** die Messelektroden (14, 16) auf einer Seite (17) mittels eines mit dem Träger (32) verhakten (54) Abdeckumspritzungsbereichs gegen Einwirkungen der Flüssigkeit abgedichtet sind.

4. Sensoranordnung nach einem der vorhergehenden Ansprüche, **dadurch gekennzeichnet, dass** zwischen Abdeckbereich (48) und Träger (32) eine Trennplatte (60) angeordnet ist zur Bedeckung von die Messelektroden (14, 16) abdichtenden Dichtelementen (56, 58).

5. Sensoranordnung nach einem der vorhergehenden Ansprüche, **dadurch gekennzeichnet, dass** der Temperatursensor (44) auf der Seite (19) der Messelektroden (14, 16) angeordnet ist, die für eine Platzierung in Bodennähe des Tanks (5) vorgesehen ist.

6. Sensoranordnung nach einem der vorhergehenden Ansprüche, **dadurch gekennzeichnet, dass** der Träger (32) aus Kunststoff besteht.

## Claims

1. Sensor arrangement for determining a fill level of a liquid (7) contained in a tank (5), in particular a reducing agent for removing nitrogen oxide from exhaust gases of an internal combustion engine, in which at least two electrically conductive measuring electrodes (14, 16) for fill level measurement are partly embedded in a carrier (8, 32) of electrically nonconductive material, and a temperature sensor (44), in particular an electric resistor (74) with a negative temperature coefficient serving as a temperature sensor, is integrated in the carrier, **characterized in that** the temperature sensor is arranged in the interior of the carrier (32) and is located in a tubular region (52) which is connected in one piece to a covering region (48), by means of which the measuring electrodes (14, 16) are sealed off on one side (17) against actions of the liquid, wherein the covering region, formed as a spray-coated covering region, is connected in one piece to material which locks the temperature sensor in a highly thermally conductive manner within the carrier, wherein the carrier (8) is produced by primary spray-coating of the measuring electrodes (14, 16) with the electrically nonconductive material, wherein the one-piece connection of the spray-coated covering region with the material is carried out by the spray-coated covering region being produced in a secondary spray-coating following thereon.

2. Sensor arrangement according to Claim 1, **characterized in that** the measuring electrodes are arranged substantially parallel to each other, and **in that** the tubular region extends parallel to the measuring electrodes.

3. Sensor arrangement according to one of the preceding claims, **characterized in that** the measuring electrodes (14, 16) are sealed off on one side (17) against actions of the liquid by means of a spray-coated covering region hooked (54) to the carrier (32).

4. Sensor arrangement according to one of the preceding claims, **characterized in that** between the covering region (48) and carrier (32) there is arranged a separating plate (60) for covering sealing elements (56, 58) sealing off the measuring electrodes (14, 16).

5. Sensor arrangement according to one of the preceding claims, **characterized in that** the temperature sensor (44) is arranged on a side (19) of the measuring electrodes (14, 16) which is provided for placement in the vicinity of the bottom of the tank (5).

6. Sensor arrangement according to one of the preceding claims, **characterized in that** the carrier (32) consists of plastic.

## Revendications

1. Arrangement détecteur destiné à déterminer un niveau de remplissage d'un liquide (7) contenu dans un réservoir (5), notamment d'un agent réducteur destiné à dénitrurer des gaz d'échappement d'un moteur à combustion interne, avec lequel au moins deux électrodes de mesure (14, 16) électriquement conductrices servant à la mesure du niveau de remplissage sont partiellement enrobées dans un élément porteur (8, 32) en un matériau non électriquement conducteur et un capteur de température (44), notamment une résistance électrique (74) servant de capteur de température avec un coefficient de température négatif, est intégré dans l'élément porteur, **caractérisé en ce que** le capteur de température est disposé à l'intérieur de l'élément porteur (32) et se trouve dans une zone de forme tubulaire (52), laquelle est en liaison d'un seul tenant avec une zone de recouvrement (48) au moyen de laquelle les électrodes de mesure (14, 16) sont rendues étanches d'un côté (17) contre les effets du liquide, la zone de recouvrement réalisée sous la forme d'une zone surmoulée de recouvrement étant reliée d'un seul tenant avec un matériau qui immobilise le capteur de température à l'intérieur de l'élément porteur avec une bonne conduction thermique, l'élément porteur (8) étant produit par un surmoulage primaire des électrodes de mesure (14, 16) avec le matériau électriquement non conducteur, la liaison d'un seul tenant de la zone surmoulée de recouvrement avec le matériau étant réalisée en produisant la zone surmoulée de recouvrement dans un surmoulage secondaire qui suit.

2. Arrangement détecteur selon la revendication 1, **caractérisé en ce que** les électrodes de mesure sont disposées sensiblement en parallèle l'une de l'autre et **en ce que** la zone de forme tubulaire s'étend parallèlement aux électrodes de mesure.

3. Arrangement détecteur selon l'une des revendications précédentes, **caractérisé en ce que** les électrodes de mesure (14, 16) sont rendues étanches d'un côté (17) contre les effets du liquide au moyen d'une zone surmoulée de recouvrement accrochée (54) à l'élément porteur (32).

4. Arrangement détecteur selon l'une des revendications précédentes, **caractérisé en ce qu'**une plaque de séparation (60) est disposée entre la zone de recouvrement (48) et l'élément porteur (32), servant à recouvrir des éléments d'étanchéité (56, 58) qui réalisent l'étanchéité des électrodes de mesure (14, 16).

5. Arrangement détecteur selon l'une des revendications précédentes, **caractérisé en ce que** le capteur de température (44) est disposé sur le côté (19) des électrodes de mesure (14, 16) qui est destiné à être placé à proximité du fond du réservoir (5).

6. Arrangement détecteur selon l'une des revendications précédentes, **caractérisé en ce que** l'élément porteur (32) se compose de matière plastique.
